# EUROPEAN PATENT APPLICATION

(11) **EP 3 820 131 A1**
(43) Date of publication of application: **12.05.2021**
(21) Application number: 19865802.3
(22) Date of filing: 20.09.2019
(51) Int. Cl.: H04M 1/725, H04M 3/493

(54) **CONTROL METHOD FOR MEDIA DISPLAY AND RELATED PRODUCTS**

(30) Priority: 30.09.2018 CN 201811160189
(71) Applicant: HUAWEI TECHNOLOGIES CO., LTD., Shenzhen, Guangdong 518129 (CN)
(72) Inventor: XU, Baolei, Shenzhen, Guangdong 518129 (CN); SHI, Teng, Shenzhen, Guangdong 518129 (CN); ZHONG, Jieping, Shenzhen, Guangdong 518129 (CN); FANG, Qiang, Shenzhen, Guangdong 518129 (CN); ZHANG, Yaoye, Shenzhen, Guangdong 518129 (CN)
(74) Representative: Pfenning, Meinig & Partner mbB
(86) International application number: PCT/CN2019/106874
(87) International publication number: WO 2020/063462

(57) **Abstract**

Embodiments of the present invention disclose a media display control method and a related product. The method includes: after a call between a first terminal and a second terminal rings, obtaining candidate media information from a resource server, and displaying the candidate media information; determining first to-be-displayed media information after the call between the first terminal and the second terminal is connected, where the first to-be-displayed media information is media information selected from the candidate media information; and sending, by the first terminal, the first to-be-displayed media information to the second terminal. Media information displayed by the terminals may be controlled after the call between the terminals is connected, so that the displayed information is controlled during the call. In this way, valuable information is displayed to the user, and communication efficiency is improved.

## Description

This application claims priority to Chinese Patent Application No. CN201811160189.5, filed with the China National Intellectual Property Administration on September 30, 2018 and entitled "MEDIA DISPLAY CONTROL METHOD AND RELATED PRODUCT", which is incorporated herein by reference in its entirety.

### TECHNICAL FIELD

The present invention relates to the field of communications technologies, and in particular, to an information display control method and a related product.

### BACKGROUND

A mobile terminal has a function of displaying media, and the displayed media may be determined based on a requirement. For example, information such as a ringback tone, a name of a called party, or a home address is displayed before a call is connected, to inform a calling party that the call is being connected. For another example, information such as a carrier name, or a name and phone number of the calling party/called party is displayed during the call.

During the call, current media display focuses on display of call information. More specifically, a graphical user interface (graphical user interface, GUI) of a call application (application, APP) is divided into two areas: a call information display area and a call control area. The call information display area is used to display information such as a name of a carrier that provides a call service, call duration, and the name, the phone number, and a geographic location of the calling party/called party. The call control area mainly includes function buttons for controlling the call, such as hanging up, waiting, and speaker.

Currently, the call information display area occupies a larger display space, but the displayed information brings very limited value to a user.

### SUMMARY

A technical problem to be resolved in embodiments of the present invention is to provide a media display control method and a related product, to control displayed information during a call, so as to display valuable information to a user, and improve communication efficiency.

According to a first aspect, an embodiment of the present invention provides a media display control method, including:
obtaining, by a first terminal, candidate media information from a resource server, and displaying the candidate media information;
determining first to-be-displayed media information after a call between the first terminal and the second terminal is connected, where the first to-be-displayed media information is media information selected from the candidate media information; and
sending, by the first terminal, the first to-be-displayed media information to the second terminal.

In this embodiment of the present invention, "first" and "second" are used to distinguish between different objects that use a same name, and do not have other meanings such as a sequence. The first terminal and the second terminal are a calling party and a called party that participate in the call. The first terminal may be the calling party or the called party. To avoid a problem that the obtained candidate media information cannot be used because the called party in the first terminal and the second terminal cannot be connected, in this embodiment of the present invention, the obtaining, by a first terminal, candidate media information from a resource server includes: obtaining, by the first terminal, the candidate media information from the resource server after the call between the first terminal and the second terminal rings.

In this embodiment, the call ringing is ringing, of the called party, that can be determined by an execution body of this embodiment. If the first terminal is the calling party, the calling party may consider by default that the called party rings after the calling party sends a call request, or the calling party receives a ringing response returned by the called party. If the first terminal is the called party, the called party starts ringing after receiving a call request.

The resource server is a server that provides media data. Because the first terminal does not need to display specific content of media data that is specified by the first terminal to be displayed by the second terminal, that is, media data corresponding to the candidate media information, the candidate media information does not need to include the specific content of the media data, and may include only an identity (identity, ID) and illustrative information of the media data, for example, the identity and a name of the media data. For example, media data of an advertisement may be an identity of the advertisement and a name of the advertisement.

Because the to-be-displayed media information is selected from the candidate media information, the candidate media information may include a plurality of pieces of media information, and these pieces of information may be carried in a form of a list.

A function of the first to-be-displayed media information is to notify the second terminal of a type of the media data to be displayed by the second terminal. The to-be-displayed media information may not be the specific content of the corresponding media data. In this way, the first terminal may not obtain the media data, and in addition, an amount of transmitted data may also be reduced.

According to the foregoing procedure in this embodiment of the present invention, media information displayed by the terminals may be controlled after the call between the terminals is connected, so that the displayed information is controlled during the call. In this way, valuable information is displayed to a user, and communication efficiency is improved.

In an optional implementation, after the call between the first terminal and the second terminal is connected, the method further includes:
receiving second to-be-displayed media information sent by the second terminal;
sending a data obtaining request to the resource server, where the data obtaining request is used to request media data specified by the second to-be-displayed media information; and
displaying the media data after receiving the media data.

In this embodiment, the second to-be-displayed media information is used by the second terminal to specify the media data to be displayed on the first terminal, and may include only an identity of specific content of the media data. The resource server is a provider of the media data.

The data obtaining request may be the identity of the specific content of the media data included in the second to-be-displayed media information.

In an optional implementation, the sending, by the first terminal, the first to-be-displayed media information to the second terminal includes:
sending the first to-be-displayed media information to a serving-call session control function (serving-call session control function, S-CSCF), so that the serving-call session control function forwards the first to-be-displayed media information to the second terminal; or
sending the first to-be-displayed media information to the second terminal by using an SMS message.

After the first terminal sends the SMS message, the SMS message may be forwarded to the second terminal sequentially by network side devices such as a proxy-call session control function (proxy-call session control function, P-CSCF), the S-CSCF, and an internet protocol short message gateway (internet protocol short message gateway, IP-SM-GW).

In this embodiment, if the first to-be-displayed media information is sent by using the SMS message, it needs to be ensured that the second terminal can learn, after receiving the SMS message, that the SMS message includes the first to-be-displayed media information, to trigger the second terminal to obtain the first to-be-displayed media information. The first to-be-displayed media information may be the identity of the media data. A specific implementation may include: An identity of the first terminal is used to determine that the SMS message carries the information used to indicate the media data to be displayed by the second terminal; or indication information is added into the SMS message, to indicate that the SMS message carries the information used to indicate the media data to be displayed by the second terminal.

On the side of the second terminal, the second terminal needs to obtain the first to-be-displayed media information from the SMS message after receiving the SMS message. The second terminal may obtain the identity by using the following two methods:

After the call between the second terminal and the first terminal is connected, if receiving the SMS message from the first terminal, the second terminal obtains the first to-be-displayed media information included in the SMS message; or
after the call between the second terminal and the first terminal is connected, the second terminal obtains the first to-be-displayed media information from the SMS message if the second terminal receives the SMS message, the SMS message includes the indication information, and the indication information is used to indicate that the SMS message carries the information used to specify the media data to be displayed by the second terminal.

In an optional implementation, the sending the first to-be-displayed media information to a serving-call session control function includes:
sending, to the serving-call session control function, session initiation protocol (session initiation protocol, SIP) information (information, INFO) carrying the first to-be-displayed media information.

This embodiment provides an optional message type used when the S-CSCF is used to forward the first to-be-displayed media information.

In an optional implementation,
a call interface of the first terminal sequentially includes a call information display area, a candidate media information display area, and a call control area from top to bottom; and the method further includes: displaying the candidate media information in the candidate media information display area.

This embodiment provides specific display content of a GUI design. The candidate media information display area is located between the call information display area and the call control area, and the call control area is usually located in an area which can be operated by the user when the user holds the mobile terminal.

In an optional implementation, the call interface of the first terminal further includes a media data display area that shares the display area with the candidate media information display area; and
an interface of the candidate media information display area includes a control interface for switching to the media data display area; and an interface of the media data display area includes a control interface for switching to the candidate media information display area; or
when the candidate media information display area is displayed on a frontend, the media data display area can be displayed on the frontend through flicking on the candidate media information display area; or when the media data display area is displayed on a frontend, the candidate media information display area can be displayed on the frontend through flicking on the media data display area.

In this embodiment, the media data display area is further provided. The media data display area and the candidate media information display area share the display area. Therefore, when either of the two display areas is displayed on the frontend, the other display area may not be displayed. The control interface may be used by the user to switch between the display areas.

In addition, switching between the candidate media information display area and the media data display area may be controlled by the terminal. For example, the terminal displays the candidate media information display area when receiving the candidate media information, and displays the media data display area when receiving the media data.

In an optional implementation, the determining first to-be-displayed media information includes:
analyzing content of the call, and selecting, from the candidate media information, media information associated with the content of the call, as the first to-be-displayed media information; or
receiving media indication information, and obtaining, from the indication information, media information specified by the media indication information, as the first to-be-displayed media information, where the first to-be-displayed media information is media information in the candidate media information.

This embodiment provides two implementations for determining the to-be-displayed media content. The former can intelligently determine the media data that is specified by the first terminal to be displayed by the second terminal. The latter can facilitate autonomous control of the user.

In an optional implementation, the obtaining candidate media information from a resource server, and displaying the candidate media information include:
sending, to the resource server by using a hypertext transfer protocol (hypertext transfer protocol, HTTP), a request for the candidate media information; and
receiving one or more candidate media identities and candidate media names returned by the resource server, and displaying the candidate media names.

In this embodiment, the specific content of the candidate media information is provided. The candidate media identities are used to distinguish between different candidate media, and the candidate media names are used to describe content included in the candidate media. When the candidate media information is displayed, the candidate media names in the candidate media information may be selected for display, and may be displayed by using a list.

In an optional implementation, the determining first to-be-displayed media information, where the first to-be-displayed media information is media information selected from the candidate media information includes:
determining a first to-be-displayed media identity, where the first to-be-displayed media identity is a media identity selected from the candidate media identities.

In this embodiment, the first to-be-displayed media information is information to be sent to the second terminal. When the information has an excessively large amount of data or includes unnecessary information, a large amount of data is to be transmitted. In this embodiment, only the media identity is transmitted, so that data of a minimum amount may be transmitted. This reduces the amount of data to be transmitted.

In an optional implementation, the first terminal is a calling terminal, and the second terminal is a called terminal; and the obtaining, by a first terminal, candidate media information from a resource server includes:
obtaining, by the first terminal, the candidate media information from the resource server after receiving a ringing message returned by the second terminal; or
the first terminal is a called terminal, and the second terminal is a calling terminal; and the obtaining, by a first terminal, candidate media information from a resource server after establishing a call connection to a second terminal includes:
   obtaining, by the first terminal, the candidate media information from the resource server after receiving a call request sent by the first terminal.

In this embodiment, two application scenarios are provided. The former is a scenario in which the calling terminal specifies the media data to be displayed by the called terminal, and the latter is a scenario in which the called terminal specifies the media data to be displayed by the calling terminal.

According to a second aspect, an embodiment of the present invention further provides a media display control apparatus, including:
a candidate information obtaining unit, configured to obtain candidate media information by a first terminal from a resource server;
a display unit, configured to display the candidate media information;
a media information determining unit, configured to determine first to-be-displayed media information after a call between the first terminal and the second terminal is connected, where the first to-be-displayed media information is media information selected from the candidate media information; and
a sending unit, configured to send the first to-be-displayed media information to the second terminal.

In an optional implementation, the apparatus further includes:
a receiving unit, configured to: after the call between the first terminal and the second terminal is connected, receive second to-be-displayed media information sent by the second terminal; and
a data obtaining unit, configured to send a data obtaining request to the resource server, where the data obtaining request is used to request media data specified by the second to-be-displayed media information, where
the display unit is further configured to display the media data after the media data is received.

In an optional implementation, the sending unit is configured to send the first to-be-displayed media information to a serving-call session control function, so that the serving-call session control function forwards the first to-be-displayed media information to the second terminal; or
the sending unit is configured to send the first to-be-displayed media information to the second terminal by using an SMS message.

In an optional implementation, the sending unit is configured to send, to the serving-call session control function, session initiation protocol information carrying the first to-be-displayed media information.

In an optional implementation, a call interface of the first terminal sequentially includes a call information display area, a candidate media information display area, and a call control area from top to bottom; and the apparatus further includes:
the display unit is specifically configured to display the candidate media information in the candidate media information display area.

In an optional implementation, the call interface of the first terminal further includes a media data display area that shares the display area with the candidate media information display area; and
an interface of the candidate media information display area includes a control interface for switching to the media data display area; and an interface of the media data display area includes a control interface for switching to the candidate media information display area; or
when the candidate media information display area is displayed on a frontend, the media data display area can be displayed on the frontend through flicking on the candidate media information display area; or when the media data display area is displayed on a frontend, the candidate media information display area can be displayed on the frontend through flicking on the media data display area.

In an optional implementation, the media information determining unit is configured to: analyze content of the call, and select, from the candidate media information, media information associated with the content of the call, as the first to-be-displayed media information; or
the media information determining unit is configured to: receive media indication information, and obtain, from the indication information, media information specified by the media indication information, as the first to-be-displayed media information, where the first to-be-displayed media information is media information in the candidate media information.

In an optional implementation, the candidate information obtaining unit is configured to: send, to the resource server by using a hypertext transfer protocol, a request for the candidate media information; and receive one or more candidate media identities and candidate media names returned by the resource server; and
the display unit is configured to display the candidate media names.

In an optional implementation, the media information determining unit is configured to determine a first to-be-displayed media identity, where the first to-be-displayed media identity is a media identity selected from the candidate media identities.

In an optional implementation, the first terminal is a calling terminal, and the second terminal is a called terminal; and
the candidate information obtaining unit is configured to obtain the candidate media information from the resource server after the first terminal receives a ringing message returned by the second terminal; or
the first terminal is a called terminal, and the second terminal is a calling terminal; and
the candidate information obtaining unit is configured to obtain the candidate media information from the resource server after the first terminal receives a call request sent by the first terminal.

According to a third aspect, an embodiment of the present invention further provides a media display control method, including:
after a call between a first terminal and a second terminal is connected, receiving to-be-displayed media information sent by the second terminal;
sending a data obtaining request to the resource server, where the data obtaining request is used to request media data specified by the to-be-displayed media information; and
displaying the media data after receiving the media data.

In an optional implementation, the sending a data obtaining request to the resource server includes:
sending the data obtaining request to the resource server by using a hypertext transfer protocol.

In an optional implementation, a call interface of the first terminal sequentially includes a call information display area, a media data display area, and a call control area from top to bottom; and the apparatus further includes:
displaying the media data in the media data display area.

According to a fourth aspect, an embodiment of the present invention further provides a media display control apparatus, including:
a display information obtaining unit, configured to: after a call between a first terminal and a second terminal is connected, receive to-be-displayed media information sent by the second terminal;
a data obtaining unit, configured to send a data obtaining request to the resource server, where the data obtaining request is used to request media data specified by the to-be-displayed media information; and
a display unit, configured to display the media data after the media data is received.

In an optional implementation, the data obtaining unit is configured to send the data obtaining request to the resource server by using a hypertext transfer protocol.

In an optional implementation, a call interface of the first terminal sequentially includes a call information display area, a media data display area, and a call control area from top to bottom; and
the display unit is configured to display the media data in the media data display area.

According to a fifth aspect, an embodiment of the present invention further provides a terminal device, including: a processor, a display, a memory, and a transceiver. The processor, the memory, and the transceiver are connected in a communicable manner;
the memory stores program code;
the processor is configured to read the program code and cooperate with the transceiver to implement an information exchange function in any method provided in the embodiments of the present invention; and
the processor is further configured to read the program code and cooperate with the display to implement an information display function or a data display function in any method provided in the embodiments of the present invention.

According to a sixth aspect, an embodiment of the present invention further provides a storage medium. The storage medium stores program code, and the program code includes a program instruction. When the program instruction is executed by the processor, the processor is enabled to cooperate with the transceiver to implement an information exchange function in any method provided in the embodiments of the present invention; and when the program instruction is executed by the processor, the processor is further enabled to cooperate with the display to implement an information display function or a data display function in any method provided in the embodiments of the present invention.

According to a seventh aspect, an embodiment of the present invention further provides a computer program product. The computer program product includes a program instruction. When the program instruction is executed by the processor, the processor is enabled to cooperate with the transceiver to implement an information exchange function in any method provided in the embodiments of the present invention; and when the program instruction is executed by the processor, the processor is further enabled to cooperate with the display to implement an information display function or a data display function in any method provided in the embodiments of the present invention.

### BRIEF DESCRIPTION OF DRAWINGS

To describe the technical solutions in embodiments of the present invention or in the background more clearly, the following briefly describes the accompanying drawings for describing the embodiments of the present invention or the background.
FIG. 1A is a schematic diagram of a GUI according to an embodiment of the present invention;
FIG. 1B is a schematic diagram of a GUI according to an embodiment of the present invention;
FIG. 1C is a schematic diagram of a GUI according to an embodiment of the present invention;
FIG. 2 is a schematic diagram of function modules of a terminal according to an embodiment of the present invention;
FIG. 3 is a schematic diagram of system connection/networking according to an embodiment of the present invention;
FIG. 4 is a schematic flowchart of a method according to an embodiment of the present invention;
FIG. 5 is a signaling flowchart according to an embodiment of the present invention;
FIG. 6 is a signaling flowchart according to an embodiment of the present invention;
FIG. 7 is a signaling flowchart according to an embodiment of the present invention;
FIG. 8 is a schematic structural diagram of a media display control apparatus according to an embodiment of the present invention;
FIG. 9 is a schematic structural diagram of a media display control apparatus according to an embodiment of the present invention;
FIG. 10 is a schematic structural diagram of a device according to an embodiment of the present invention; and
FIG. 11 is a schematic structural diagram of a terminal device according to an embodiment of the present invention.

### DESCRIPTION OF EMBODIMENTS

The following describes the embodiments of the present invention with reference to the accompanying drawings in the embodiments of the present invention.

In the following embodiments, for example, a terminal is a mobile phone, and candidate media information is a candidate advertisement. Correspondingly, to-be-displayed media information is an advertisement, and a resource server is an advertisement server. For example, the candidate media information is carried in a form of a list. Correspondingly, a candidate media information display area may be referred to as a candidate resource list display area, and a media data display area may be referred to as a push resource display area. The foregoing is used as an example, and should not be understood as a unique limitation on the embodiments of the present invention. For example, the candidate media information may be any information that can be displayed by a terminal device, and may be a background image, a text description, or the like in addition to the advertisement.

The embodiments of the present invention mainly resolve a problem that a calling party and a called party cannot control displayed media data during a call, that is, a time interval between a start time and an end time of the call between the calling party and the called party. According to the embodiments of the present invention, a user requirement in a scenario such as telesales can be met, to improve a monetization capability of a service (including an advertisement) of a carrier or a mobile phone terminal vendor.

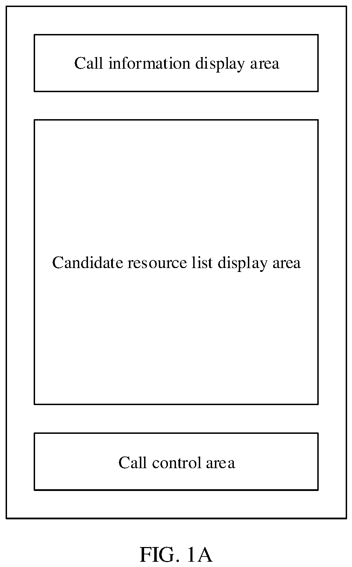

FIG. 1A to FIG. 1C each are a schematic diagram of a GUI according to an embodiment of the present invention.

FIG. 1A includes a call information display area, a candidate resource list area, and a call control area. FIG. 1A shows a GUI of a controlling device, that is, a device that specifies media data to be displayed by a peer end. A candidate advertisement name list may be displayed in the candidate resource list display area.

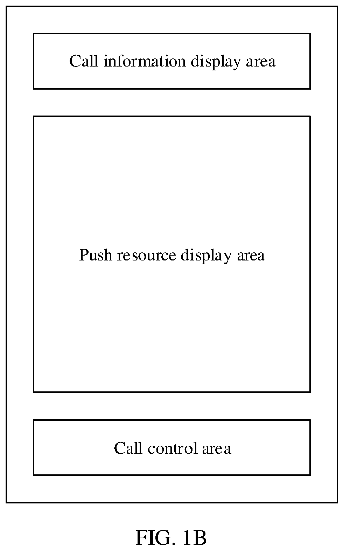

FIG. 1B includes a call information display area, a push resource display area, and a call control area. FIG. 1B shows a GUI of a controlled device, or referred to as a controlled device, that is, the peer end of the device in FIG. 1A. Advertisement content may be displayed in the push resource display area.

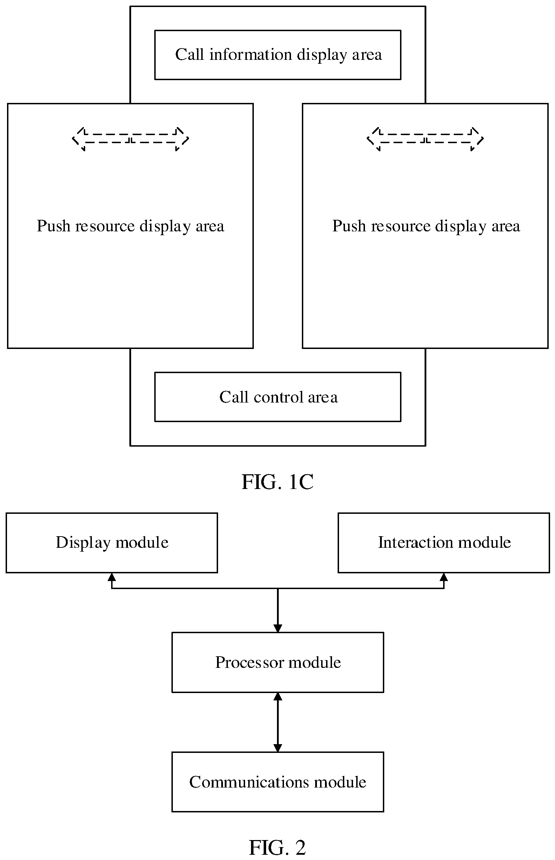

FIG. 1C includes three areas: a call information display area, a call control area, and a candidate resource list area and a push resource display area that share one display area. There is an arrow-shaped button on each of interfaces of the candidate resource list area and the push resource display area, and the arrow-shaped button may be used for switching between the candidate resource list area and the push resource display area. Alternatively, there may be no button on the interfaces of the candidate resource list area and the push resource display area, and a flick operation is used to control switching between the interfaces of the candidate resource list area and the push resource display area.

In FIG. 1A to FIG. 1C, the GUI is divided into three areas. Information displayed in the call information display area may include information about a carrier (for example, a name of the carrier), information about a contact of a call (for example, a name and a phone number), and status information of the call (for example, duration of the call). The candidate resource list display area may be on a call APP on the controlling device, and is used to display a list of advertisements obtained by the controlling device from an advertisement server. For simplicity, only a name of each advertisement may be displayed. The push resource display area is on a call APP of the controlled device, and is used to display detailed information of advertisement content pushed by the controlling device. For simplicity, only an image may be displayed. The call control area may include a call control button (such as pausing, muting, hanging-up, or resource sending), a keypad, or other buttons.

FIG. 2 is a schematic diagram of function modules of a terminal according to an embodiment of the present invention. The terminal may include a display module, an interaction module, a processor module, and a communications module. The display module is responsible for displaying the GUI shown in each of FIG. 1A to FIG. 1C on a screen. The interaction module is responsible for receiving an input operation of a user, for example, a tap operation performed by the user when the user selects a resource from a candidate resource list. The processor module is responsible for processing information such as input of the user and input of the communications module. The communications module is responsible for interacting with a core network device. The core network device may be, for example, an S-CSCF, which is described in detail below.

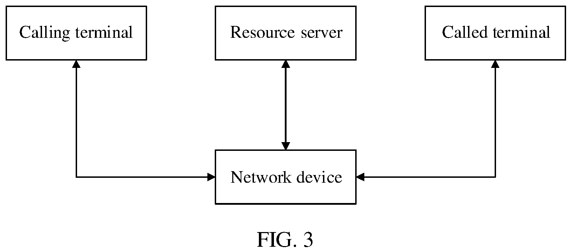

FIG. 3 is a diagram of system connection/networking according to the present invention. The embodiments of the present invention mainly involve a calling terminal, a called terminal, and a resource server, which may all be connected to a network device and may exchange information through the network device. The calling terminal and the called terminal provide functions such as providing one or more to-be-selected media resources and displaying a media resource to the user. The resource server provides a function of storing media resources, that is, a function of storing content of media data. The network device provides a network connection capability, and the network device may include a device such as an S-CSCF.

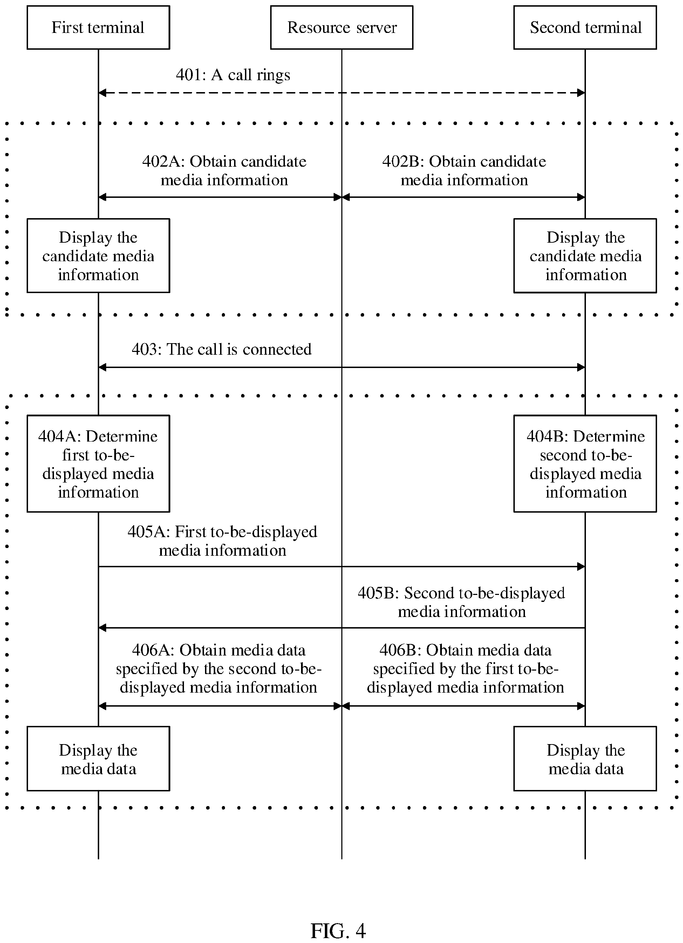

FIG. 4 is a schematic flowchart of a method according to an embodiment of the present invention. The method specifically includes the following steps.

401: A call between a first terminal and a second terminal rings.

This step may not be used as a necessary premise, and is represented by a dashed line in FIG. 4.

The first terminal and the second terminal are a calling party (namely, a calling terminal) and a called party (namely, a called terminal) that participate in the call. The first terminal may be the calling party or the called party. In this embodiment, the call ringing is ringing, of the called party, that can be determined by an execution body of this embodiment. If the first terminal is the calling party, the calling party may consider by default that the called party rings after the calling party sends a call request, or the calling party receives a ringing response returned by the called party. If the first terminal is the called party, the called party starts ringing after receiving a call request.

402A: After the call between the first terminal and the second terminal rings, the first terminal obtains candidate media information from a resource server, and displays the candidate media information.

403: The call between the first terminal and the second terminal is connected.

404A: The first terminal determines first to-be-displayed media information after the call between the first terminal and the second terminal is connected, where the first to-be-displayed media information is media information selected from the candidate media information.

405A: The first terminal sends the first to-be-displayed media information to the second terminal.

406A: The second terminal obtains, from the resource server, media data specified by the first to-be-displayed media information, and displays the media data.

402B: After the call between the first terminal and the second terminal rings, the second terminal obtains candidate media information from the resource server, and displays the candidate media information.

404B: The second terminal determines second to-be-displayed media information after the call between the first terminal and the second terminal is connected, where the second to-be-displayed media information is media information selected from the candidate media information.

405B: The second terminal sends the second to-be-displayed media information to the first terminal.

406B: The first terminal obtains, from the resource server, media data specified by the second to-be-displayed media information, and displays the media data.

The resource server is a server that provides the media data. The candidate media information does not need to include specific content of the media data, and may include only an ID and illustrative information of the media data, for example, an identity and a name of the media data. For example, media data of an advertisement may be an identity of the advertisement and a name of the advertisement.

Because the to-be-displayed media information is selected from the candidate media information, the candidate media information may include a plurality of pieces of media information, and these pieces of information may be carried in a form of a list. For this embodiment, refer to descriptions of corresponding content in the summary. Details are not described herein again.

In this embodiment, 402Aand 403Ato 406Amay coexist with 402B and 403B to 406B, or only one of the two procedures may be included. This is not uniquely limited in this embodiment of the present invention.

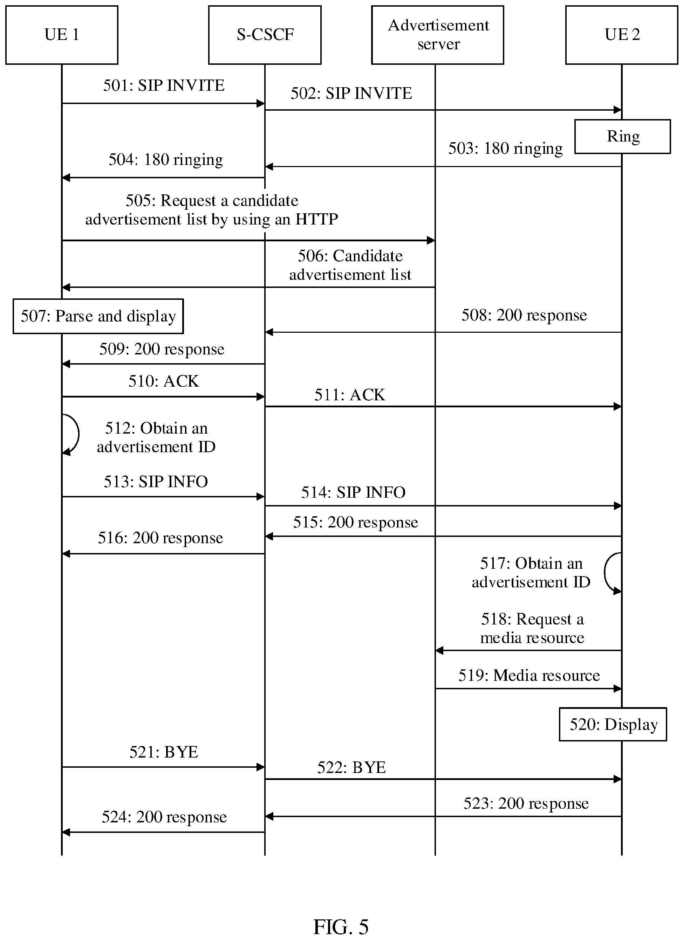

FIG. 5 is a signaling flowchart of an application scenario in which an advertisement is pushed, a calling device serves as a controlling device, and a called device serves as a controlled device according to an embodiment of the present invention. Specifically, the following steps are included.

501: User equipment 1 (user equipment, UE 1) sends a session initiation protocol (session initiation protocol, SIP) invite (INVITE) message to an S-CSCF.

In this embodiment, the UE is a terminal, or is referred to as a terminal device.

502: The S-CSCF forwards the SIP invite message to UE 2.

503: After receiving the SIP invite message, the UE 2 starts ringing, and then sends a 180 ringing (ringing) response message to the S-CSCF.

504: The S-CSCF forwards the 180 ringing response message to the UE 1.

505: The UE 1 requests, from an advertisement server by using an HTTP, a candidate advertisement list corresponding to a user ID.

For example, an example in which the UE 1 requests, by using GET (an APP), a candidate advertisement list corresponding to a user ID of zhangsan is as follows:
GET /ads-list/?user-id=zhangsan HTTP/1.1
Host: www.ad-server.com
User-Agent: calling-ad-client

506: The advertisement server returns, to the UE 1 by using the HTTP, the advertisement list requested by the UE 1.

The returned advertisement list may include advertisement IDs and advertisement names. An example is as follows:
HTTP/1.1 200 OK
Date: Fri, 29 Jun 2018 14:00:00 GMT
Status: 200
Content-Type: Text
Content-Length: 48
{id-ad1: title1, id-ad2: title2, id-ad3: title3}

507: The UE 1 parses the advertisement list returned by the advertisement server, and then displays the advertisement names in the advertisement list in the candidate resource list display area shown in FIG. 1A or FIG. 1C.

508: After the UE 2 answers the call, the UE 2 sends, to the S-CSCF, a 200 response (OK) for the SIP invite message.

509: The S-CSCF forwards the 200 response to the UE 1.

510: The UE 1 sends an acknowledgment (ACK) message to the S-CSCF.

511: The S-CSCF forwards the ACK message to the UE 2. At this time, the call between the UE 1 and the UE 2 is connected, that is, the UE 1 and the UE 2 formally starts talking.

512: During the call between the UE 1 and the UE 2, the UE 1 determines an advertisement as an advertisement to be displayed on the UE 2, and obtains an ID of the advertisement.

There may be a plurality of manners for the UE 1 to determine the to-be-displayed advertisement. In a manner, a user selects the advertisement from the advertisement list by using the interaction module shown in FIG. 3. In another manner, voice data in the call is obtained, the voice data is recognized to obtain a keyword associated with a name in the advertisement list, and then an advertisement associated with the keyword is determined as the to-be-displayed advertisement. Alternatively, after the voice data in the call is obtained, the voice data is converted into text information, then semantic analysis is performed on the text information to determine semantics of the voice data, and an advertisement that has an association relationship with the semantics is selected from the advertisement list as the to-be-displayed advertisement.

513: The UE 1 sends, to the S-CSCF through SIP INFO, the advertisement ID of the to-be-displayed advertisement.

A condition for triggering the UE 1 to send the SIP INFO may be: The UE 1 is automatically triggered after the to-be-displayed advertisement is determined, or the UE 1 is triggered by the user by using a resource sending button in the call control area in FIG. 1A or FIG. 1C.

An example of the SIP INFO is as follows:
INFO sip:ad-example SIP/2.0
From: <Sip:zhangsan>; tag=d3f423d
To: <Sip:lisi>; tag=8942
Call-ID: zhangsan-lisi
CSeq: 5
Content-Length: 13
Content-Type: application
Ad-id=ad-id-1

514: The S-CSCF sends the SIP INFO to the UE 2.

515: After receiving the SIP INFO, the UE 2 sends a 200 response (ok) message to the S-CSCF.

516: The S-CSCF forwards the 200 response message to the UE 1.

517: The UE 2 parses the received SIP INFO message, to obtain the advertisement ID from the SIP INFO message.

For example, the advertisement ID obtained through parsing is ad-id-1.

518: The UE 2 requests a media resource corresponding to the advertisement ID from the advertisement server by using the HTTP protocol.

An example is as follows:
GET /ads-content/?ad-id=ad-id-1 HTTP/1.1
Host: www.ad-server.com
User-Agent: calling-ad-client

519: The UE 2 receives, from the advertisement server, content of the media resource requested by the UE 2.

For example, the content is an image corresponding to ad-id-1.

520: The UE 2 displays, in the push resource display area shown in FIG. 1B or FIG. 1C, the content of the media resource received by the UE 2.

For example, the UE 2 displays the image.

521: After the call between the UE 1 and the UE 2 ends, the UE 1 sends a bye (BYE) message to the S-CSCF.

522: The S-CSCF forwards the bye message to the UE 2.

523: The UE 2 sends a 200 response message to the S-CSCF.

524: The S-CSCF forwards the 200 response message to the UE 1.

In the foregoing procedure, another internet protocol multimedia subsystem (internet protocol multimedia subsystem, IMS) network element including a P-CSCF may also participate in the signaling exchange procedure. For ease of description, only the S-CSCF is shown in this embodiment, and the simplified procedure does not affect understanding of the entire signaling procedure by a person skilled in the communications field. The procedure shown in FIG. 5 is not the only procedure that can be implemented.

In addition, although the advertisement is used as an example in this embodiment, the procedure is also applicable to another scenario other than the advertisement. Details are not described herein.

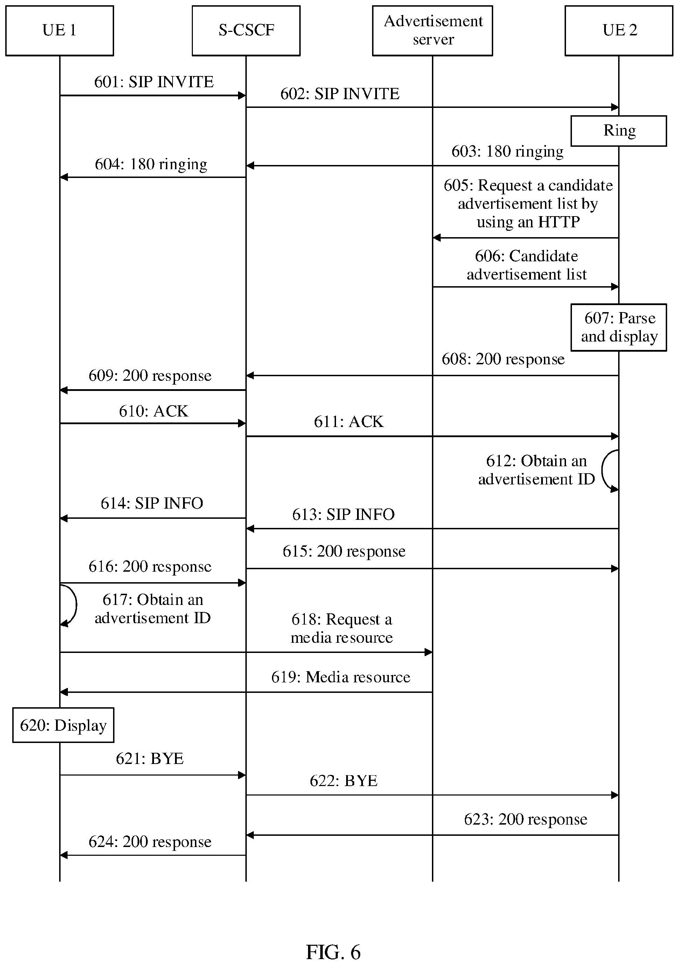

FIG. 6 is a signaling flowchart of an application scenario in which an advertisement is pushed, a calling device serves as a controlled device, and a called device serves as a controlling device according to an embodiment of the present invention. The signaling flowchart is similar to the signaling flowchart shown in FIG. 5, and differences lie in that:

605: The UE 2 requests, from the advertisement server by using the HTTP, a candidate advertisement list corresponding to a user ID.

606: The advertisement server returns, to the UE 2 by using the HTTP, the advertisement list requested by the UE 2.

607: The UE 2 parses the advertisement list returned by the advertisement server, and then displays advertisement names in the advertisement list in the candidate resource list display area shown in FIG. 1A or FIG. 1C.

612: During the call between the UE 1 and the UE 2, the UE 2 determines an advertisement as an advertisement to be displayed on the UE 2.

613: The UE 2 sends, to the S-CSCF through SIP INFO, an advertisement ID of the to-be-displayed advertisement.

614: The S-CSCF sends the SIP INFO to the UE 1.

615: After receiving the SIP INFO, the UE 1 sends a 200 response (ok) message to the S-CSCF.

616: The S-CSCF forwards the 200 response message to the UE 2.

617: The UE 1 parses the received SIP INFO message, to obtain the advertisement ID from the SIP INFO message.

618: The UE 1 requests a media resource corresponding to the advertisement ID from the advertisement server by using the HTTP protocol.

619: The UE 1 receives, from the advertisement server, content of the media resource requested by the UE 1.

620: The UE 1 displays, in the push resource display area shown in FIG. 1B or FIG. 1C, the content of the media resource received by the UE 1.

For other same steps, refer to the procedure shown in FIG. 5 and the description thereof. Details are not described again in this embodiment.

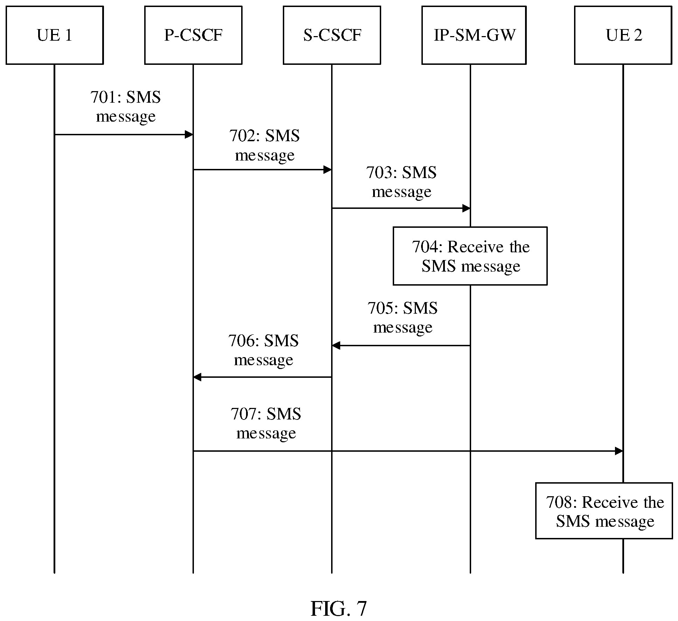

FIG. 7 shows another implementation means of a controlling device sending an advertisement ID to a controlled device according to an embodiment of the present invention, to replace a signaling procedure of 513 to 517 in FIG. 5, or replace a signaling procedure of 513 to 517 in FIG. 6. In this embodiment, an SMS message is used to carry the advertisement ID. A specific procedure is as follows:

701: UE 1 sends an SMS message to a P-CSCF, where the SMS message includes an advertisement ID of a to-be-displayed advertisement.

702: The P-CSCF forwards the SMS message to an S-CSCF.

703: The S-CSCF forwards the SMS message to an IP-SM-GW.

704: The IP-SM-GW receives the SMS message.

705: The IP-SM-GW forwards the SMS message to the S-CSCF.

706: The S-CSCF forwards the SMS message to the P-CSCF.

707: The P-CSCF forwards the SMS message to UE 2.

708: The UE 2 parses the SMS message to obtain the advertisement ID in the SMS message.

In the foregoing procedure, the UE 2 needs to identify SMS messages that may carry the advertisement ID. Several main manners are as follows:
1: After a call is connected, if the UE 2 receives an SMS message from the peer end, the UE 2 considers by default that the SMS message includes the advertisement ID, and obtains the advertisement ID; and the UE 2 does not obtain the advertisement ID if the SMS message is from another terminal.
2: The UE 1 adds indication information to the SMS message, where the indication information is information agreed between the UE 1 and the UE 2, and is used to indicate that the SMS message includes the advertisement ID. After the call is connected, if receiving an SMS message including the indication information, the UE 2 obtains the advertisement ID included in the SMS message.

In the foregoing two optional modes, the former does not need to modify a structure and content of the SMS message, and the latter can reduce unnecessary operations and a possibility of failing to obtain the advertisement ID.

According to the embodiments of the present invention, the calling party or the called party can specify the peer end to display rich media resources during the call. This improves communication efficiency. The embodiments of the present invention may be used in a scenario such as telemarketing, to help a telecommunications carrier and a terminal vendor improve stickiness of a call APP and obtain more service revenues.

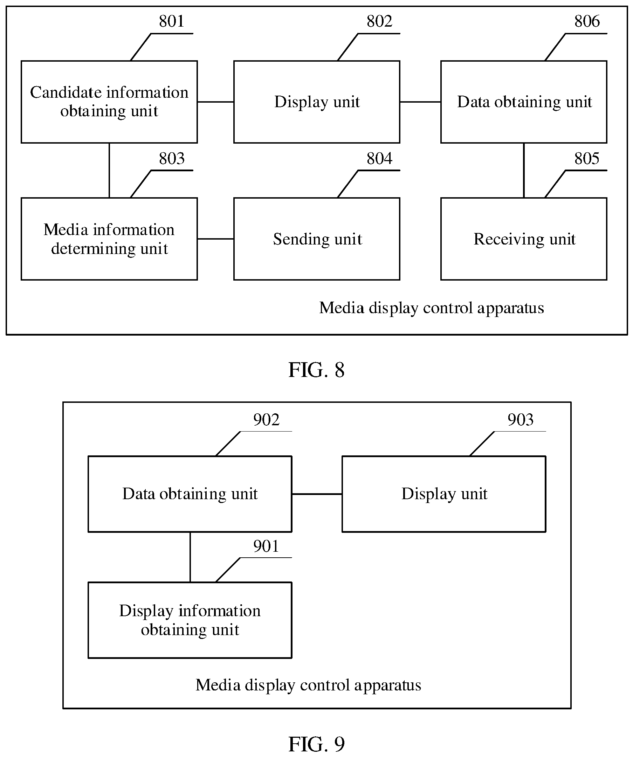

An embodiment of the present invention further provides a media display control apparatus. The media display control apparatus may be a function component or a combination of function components in a first terminal. As shown in FIG. 8, the apparatus includes:
a candidate information obtaining unit 801, configured to obtain candidate media information from a resource server;
a display unit 802, configured to display the candidate media information;
a media information determining unit 803, configured to determine first to-be-displayed media information after a call between the first terminal and the second terminal is connected, where the first to-be-displayed media information is media information selected from the candidate media information; and
a sending unit 804, configured to send the first to-be-displayed media information to the second terminal.

In an optional implementation, the apparatus further includes:
a receiving unit 805, configured to: after the call between the first terminal and the second terminal is connected, receive second to-be-displayed media information sent by the second terminal; and
a data obtaining unit 806, configured to send a data obtaining request to the resource server, where the data obtaining request is used to request media data specified by the second to-be-displayed media information, where
the display unit 802 is further configured to display the media data after the media data is received.

In an optional implementation, the sending unit 804 is configured to send the first to-be-displayed media information to a serving-call session control function, so that the serving-call session control function forwards the first to-be-displayed media information to the second terminal; or
the sending unit 804 is configured to send the first to-be-displayed media information to the second terminal by using an SMS message.

In an optional implementation, the sending unit 804 is configured to send, to the serving-call session control function, session initiation protocol information carrying the first to-be-displayed media information.

In an optional implementation, a call interface of the first terminal sequentially includes a call information display area, a candidate media information display area, and a call control area from top to bottom; and the apparatus further includes:
the display unit 802 is specifically configured to display the candidate media information in the candidate media information display area.

In an optional implementation, the call interface of the first terminal further includes a media data display area that shares the display area with the candidate media information display area; and
an interface of the candidate media information display area includes a control interface for switching to the media data display area; and an interface of the media data display area includes a control interface for switching to the candidate media information display area; or
when the candidate media information display area is displayed on a frontend, the media data display area can be displayed on the frontend through flicking on the candidate media information display area; or when the media data display area is displayed on a frontend, the candidate media information display area can be displayed on the frontend through flicking on the media data display area.

In an optional implementation, the media information determining unit 803 is configured to: analyze content of the call, and select, from the candidate media information, media information associated with the content of the call, as the first to-be-displayed media information; or
the media information determining unit 803 is configured to: receive media indication information, and obtain, from the indication information, media information specified by the media indication information, as the first to-be-displayed media information, where the first to-be-displayed media information is media information in the candidate media information.

In an optional implementation, the candidate information obtaining unit 801 is configured to: send, to the resource server by using a hypertext transfer protocol, a request for the candidate media information; and receive one or more candidate media identities and candidate media names returned by the resource server; and
the display unit 802 is configured to display the candidate media names.

In an optional implementation, the media information determining unit 803 is configured to determine a first to-be-displayed media identity, where the first to-be-displayed media identity is a media identity selected from the candidate media identities.

In an optional implementation, the first terminal is a calling terminal, and the second terminal is a called terminal; and
the candidate information obtaining unit 801 is configured to obtain the candidate media information from the resource server after the first terminal receives a ringing message returned by the second terminal; or
the first terminal is a called terminal, and the second terminal is a calling terminal; and
the candidate information obtaining unit 801 is configured to obtain the candidate media information from the resource server after the first terminal receives a call request sent by the first terminal.

An embodiment of the present invention further provides a media display control apparatus. The control apparatus may be applied to a first terminal and used as a function component or a combination of function components in the first terminal. As shown in FIG. 9, the apparatus includes:
a display information obtaining unit 901, configured to: after a call between the first terminal and a second terminal is connected, receive to-be-displayed media information sent by the second terminal;
a data obtaining unit 902, configured to send a data obtaining request to the resource server, where the data obtaining request is used to request media data specified by the to-be-displayed media information; and
a display unit 903, configured to display the media data after the media data is received.

In an optional implementation, the data obtaining unit 902 is configured to send the data obtaining request to the resource server by using a hypertext transfer protocol.

In an optional implementation, a call interface of the first terminal sequentially includes a call information display area, a media data display area, and a call control area from top to bottom; and
the display unit 903 is configured to display the media data in the media data display area.

In the foregoing embodiment, the display unit 802 or the display unit 903 may be a display screen, for example, a display screen of a mobile phone. A unit having a message or data may be a radio frequency module, and an overall function may be completed under control of a processor.

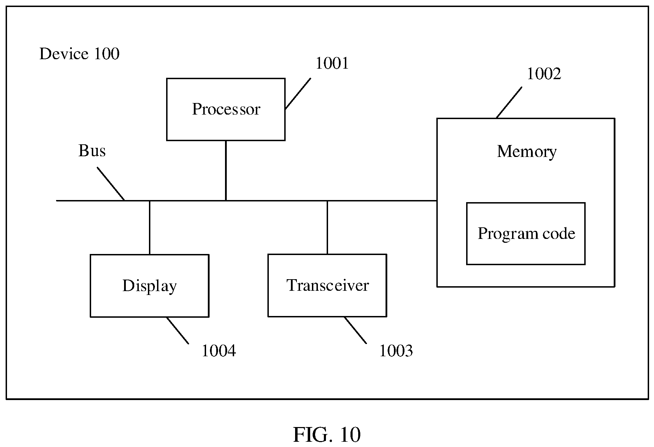

FIG. 10 shows a device 100 according to an embodiment of the present invention. The device 100 includes a processor 1001, a memory 1002, a transceiver 1003, and a display 1004. The processor 1001, the memory 1002, the transceiver 1003, and the display 1004 are connected to each other by using a bus.

The memory 1002 includes, but is not limited to, a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 1002 is configured to store a related instruction and related data. The transceiver 1003 is configured to send and receive data.

The display 1004 may be a display function component of a terminal, including a display screen of a mobile phone, and is configured to display media data and to-be-selected media information; and the display 1004 may further have a function of the interaction module shown in FIG. 2.

The processor 1001 may be one or more central processing units (central processing unit, CPU). When the processor 1001 is one CPU, the CPU may be a single-core CPU or a multicore CPU.

The processor 1001 in the device 100 is configured to: read program code stored in the memory 1002, and cooperate with the transceiver 1003 to implement an information exchange function in any method provided in the embodiments of the present invention; and the processor 1001 is further configured to: read the program code, and cooperate with the display 1004 to implement an information display function or a data display function in any method provided in the embodiments of the present invention.

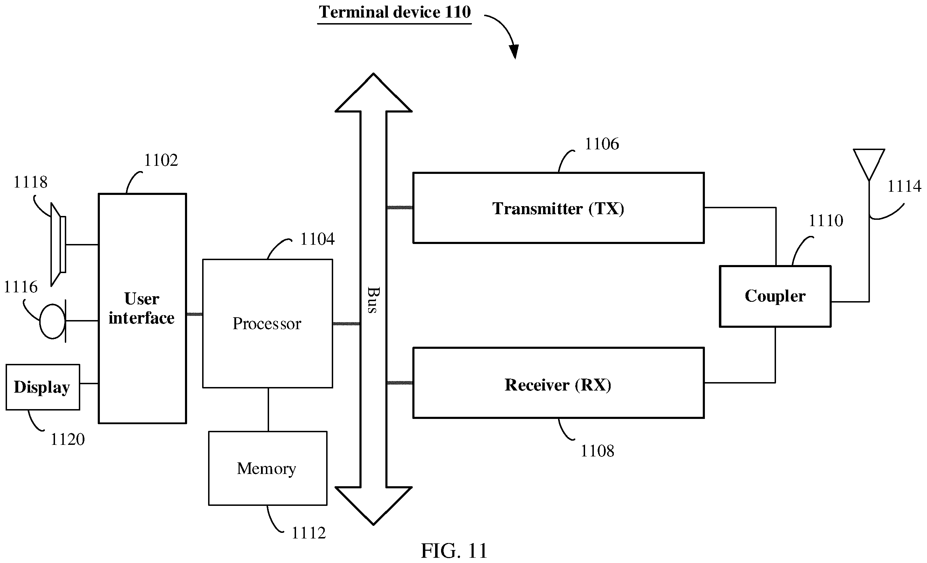

FIG. 11 shows a terminal device 110 according to some embodiments of this application. As shown in FIG. 11, the terminal device 110 may include an input/output module (including an audio input/output module 1118, a key input module 1116, a display 1120, and the like), a user interface 1102, one or more processors 1104, a transmitter 1106, a receiver 1108, a coupler 1110, an antenna 1114, and a memory 1112. These components may be connected by using a bus or in another manner. In FIG. 11, that the components are connected by using a bus is used as an example.

The antenna 1114 may be configured to convert electromagnetic energy into an electromagnetic wave in free space, or convert an electromagnetic wave in free space into electromagnetic energy in a transmission line. The coupler 1110 is configured to: divide a mobile communication signal received by the antenna 1114 into a plurality of signals, and allocate the plurality of signals to a plurality of receivers 1108.

The transmitter 1106 may be configured to perform transmission processing on a signal output by the processor 1104.

The receiver 1108 may be configured to perform reception processing on the mobile communication signal received by the antenna 1114.

In some embodiments of this application, the transmitter 1106 and the receiver 1108 may be considered as a wireless modem. There may be one or more transmitters 1106 and receivers 1108 in the terminal device 110.

In addition to the transmitter 1106 and the receiver 1108 shown in FIG. 11, the terminal device 110 may further include another communications component, for example, a global positioning system (global position system, GPS) module, a Bluetooth (Bluetooth) module, or a wireless fidelity (wireless fidelity, Wi-Fi) module. Not limited to the foregoing described wireless communication signal, the terminal device 110 may further support another wireless communication signal, for example, a satellite signal, or a short-wave signal.

The input/output module may be configured to implement interaction between the terminal device 110 and a user/an external environment, and may mainly include the audio input/output module 1118, the key input module 1116, the display 1120, and the like. Specifically, the input/output module may further include a camera, a touchscreen, a sensor, and the like. All the input/output modules communicate with the processor 1104 by using the user interface 1102.

The memory 1112 is coupled to the processor 1104, and is configured to store various software programs and/or a plurality of sets of instructions. Specifically, the memory 1112 may include a high-speed random access memory, and may further include a non-volatile memory, for example, one or more disk storage devices, a flash memory device, or another non-volatile solid-state storage device. The memory 1112 may store an operating system (briefly referred to as a system in the following), for example, an embedded operating system such as ANDROID, IOS, WINDOWS, or LINUX. The memory 1112 may further store a network communications program. The network communications program may be used to communicate with one or more additional devices, one or more terminal devices, and one or more network devices. The memory 1112 may further store a user interface program. The user interface program may vividly display content of an application program by using a graphical operating interface, and receive, by using an input control such as a menu, a dialog box, and a key, a control operation performed by a user on the application program.

In some embodiments of this application, the memory 1112 may be configured to store a program for implementing, on the side of the terminal device 110, the media display control method provided in one or more embodiments of this application. For implementation of the media display control method provided in one or more embodiments of this application, refer to the foregoing embodiments.

The processor 1104 may be configured to read and execute a computer-readable instruction. Specifically, the processor 1104 may be configured to invoke the program stored in the memory 1112, and execute an instruction included in the program, to implement the method in the embodiments of the present invention.

It may be understood that the terminal device 110 may be the terminal device in the communications system described above in the embodiments of the present invention, and may be implemented as a mobile device, a mobile station (mobile station), a mobile unit (mobile unit), a wireless unit, a remote unit, a user agent, a mobile client, or the like.

It should be noted that the terminal device 110 shown in FIG. 11 is merely an implementation of this embodiment of this application. In practical application, the terminal device 110 may alternatively include more or fewer components. This is not limited herein. In this embodiment, the processor 11 may correspond to the processor shown in FIG. 10. The transmitter 1106 and the receiver 1108 may correspond to units that implement a sending function and a receiving function.

An embodiment of the present invention further provides a storage medium. The storage medium stores program code, and the program code includes a program instruction. When the program instruction is executed by the processor, the processor is enabled to cooperate with the transceiver to implement an information exchange function in any method provided in the embodiments of the present invention; and when the program instruction is executed by the processor, the processor is further enabled to cooperate with the display to implement an information display function or a data display function in any method provided in the embodiments of the present invention.

An embodiment of the present invention further provides a computer program product. The computer program product includes a program instruction. When the program instruction is executed by the processor, the processor is enabled to cooperate with the transceiver to implement an information exchange function in any method provided in the embodiments of the present invention; and when the program instruction is executed by the processor, the processor is further enabled to cooperate with the display to implement an information display function or a data display function in any method provided in the embodiments of the present invention.

A person of ordinary skill in the art may understand that all or some of the processes of the methods in the embodiments may be implemented by a computer program instructing relevant hardware. The program may be stored in a computer-readable storage medium. When the program is run, the processes of the methods in the embodiments are performed. The foregoing storage medium includes: any medium that can store program code, such as a ROM or a random access memory RAM, a magnetic disk or an optical disc.

## Claims

1. A media display control method, comprising:
obtaining, by a first terminal, candidate media information from a resource server, and displaying the candidate media information;
after a call between the first terminal and the second terminal is connected, determining first to-be-displayed media information, which is media information selected from the candidate media information; and
sending, by the first terminal, the first to-be-displayed media information to the second terminal.

2. The method according to claim 1, wherein after the call between the first terminal and the second terminal is connected, the method further comprises:
receiving second to-be-displayed media information sent by the second terminal;
sending a data obtaining request to the resource server, wherein the data obtaining request is used to request media data specified by the second to-be-displayed media information; and
displaying the media data after receiving the media data.

3. The method according to claim 1, wherein the sending, by the first terminal, the first to-be-displayed media information to the second terminal comprises:
sending the first to-be-displayed media information to a serving-call session control function, so that the serving-call session control function forwards the first to-be-displayed media information to the second terminal; or
sending the first to-be-displayed media information to the second terminal by using an SMS message.

4. The method according to claim 3, wherein the sending the first to-be-displayed media information to a serving-call session control function comprises:
sending, to the serving-call session control function, session initiation protocol information carrying the first to-be-displayed media information.

5. The method according to any one of claims 1 to 4, wherein
a call interface of the first terminal sequentially comprises a call information display area, a candidate media information display area, and a call control area from top to bottom; and the method further comprises: displaying the candidate media information in the candidate media information display area.

6. The method according to claim 5, wherein the call interface of the first terminal further comprises a media data display area that shares the display area with the candidate media information display area; and
an interface of the candidate media information display area comprises a control interface for switching to the media data display area; and an interface of the media data display area comprises a control interface for switching to the candidate media information display area; or
when the candidate media information display area is displayed on a frontend, the media data display area can be displayed on the frontend through flicking on the candidate media information display area; or when the media data display area is displayed on a frontend, the candidate media information display area can be displayed on the frontend through flicking on the media data display area.

7. The method according to any one of claims 1 to 6, wherein the determining first to-be-displayed media information comprises:
analyzing content of the call, and selecting, from the candidate media information, media information associated with the content of the call, as the first to-be-displayed media information; or
receiving media indication information, and obtaining, from the indication information, media information specified by the media indication information, as the first to-be-displayed media information, wherein the first to-be-displayed media information is media information in the candidate media information.

8. The method according to any one of claims 1 to 6, wherein the obtaining candidate media information from a resource server, and displaying the candidate media information comprise:
sending, to the resource server by using a hypertext transfer protocol, a request for the candidate media information; and
receiving one or more candidate media identities and candidate media names returned by the resource server, and displaying the candidate media names.

9. The method according to claim 8, wherein the determining first to-be-displayed media information, which is media information selected from the candidate media information comprises:
determining a first to-be-displayed media identity, which is a media identity selected from the candidate media identities.

10. The method according to any one of claims 1 to 6, wherein the first terminal is a calling terminal, and the second terminal is a called terminal; and the obtaining, by a first terminal, candidate media information from a resource server comprises:obtaining, by the first terminal, the candidate media information from the resource server after receiving a ringing message returned by the second terminal; or
wherein the first terminal is a called terminal, and the second terminal is a calling terminal; and the obtaining, by a first terminal, candidate media information from a resource server after establishing a call connection to a second terminal comprises:obtaining, by the first terminal, the candidate media information from the resource server after receiving a call request sent by the first terminal.

11. A media display control apparatus, comprising:
a candidate information obtaining unit, configured to obtain candidate media information from a resource server;
a display unit, configured to display the candidate media information;
a media information determining unit, configured to determine, after a call between the first terminal and the second terminal is connected, first to-be-displayed media information which is media information selected from the candidate media information; and
a sending unit, configured to send the first to-be-displayed media information to the second terminal.

12. The apparatus according to claim 11, wherein the apparatus further comprises:
a receiving unit, configured to: after the call between the first terminal and the second terminal is connected, receive second to-be-displayed media information sent by the second terminal; and
a data obtaining unit, configured to send a data obtaining request to the resource server, wherein the data obtaining request is used to request media data specified by the second to-be-displayed media information, wherein
the display unit is further configured to display the media data after the media data is received.

13. The apparatus according to claim 11, wherein
the sending unit is configured to send the first to-be-displayed media information to a serving-call session control function, so that the serving-call session control function forwards the first to-be-displayed media information to the second terminal; or
the sending unit is configured to send the first to-be-displayed media information to the second terminal by using an SMS message.

14. The apparatus according to claim 13, wherein
the sending unit is configured to send, to the serving-call session control function, session initiation protocol information carrying the first to-be-displayed media information.

15. The apparatus according to any one of claims 11 to 14, wherein a call interface of the first terminal sequentially comprises a call information display area, a candidate media information display area, and a call control area from top to bottom; and the apparatus further comprises:
the display unit is specifically configured to display the candidate media information in the candidate media information display area.
